Europäisches Patentamt

European Patent Office

Office européen des brevets

(19)

(11) Veröffentlichungsnummer: **0 270 044**
**A2**

(12) **EUROPÄISCHE PATENTANMELDUNG**

(21) Anmeldenummer: 87117632.7

(51) Int. Cl.⁴: **H01M 10/42**

(22) Anmeldetag: **28.11.87**

(30) Priorität: **04.12.86 DE 3641501**

(43) Veröffentlichungstag der Anmeldung:
**08.06.88 Patentblatt 88/23**

(84) Benannte Vertragsstaaten:
**DE ES FR GB IT SE**

(71) Anmelder: **BBC Brown Boveri
Aktiengesellschaft
Kallstadter Strasse 1
D-6800 Mannheim 31(DE)**

(72) Erfinder: **Knödler, Reinhard, Dr. Dipl.-Phys.
Lattweg 17
D-6902 Sandhausen(DE)**
Erfinder: **Petri, Günther Friedrich
Am Leimbachring 46
D-6902 Sandhausen(DE)**
Erfinder: **Hasenauer, Dieter, Dipl.-Ing.
Freudenbergstrasse 13
D-6940 Weinheim(DE)**

(74) Vertreter: **Rupprecht, Klaus, Dipl.-Ing. et al
c/o BBC Brown Boveri Aktiengesellschaft
Kallstadter Str. 1 Postfach 100 351
D-6800 Mannheim 31(DE)**

(54) **Sicherung.**

(57) Die Erfindung bezieht sich auf eine Sicherung (1) zum Überbrücken einer elektrochemischen Speicherzelle. Aufgabe der Erfindung ist es, die Sicherung (1) so auszubilden, daß der Stromkreis durch die Speicherzelle (40) schon beim Erreichen eines inneren Widerstandes von 100 mOhm unterbrochen wird. Die erfindungsgemäße Sicherung (1) weist ein temperatursensitives Bauelement (2) sowie ein spannungssensitives Bauelement (3) auf. Diese sind zueinander parallel geschaltet. Die Sicherung (1) selbst ist wiederum parallel zu der Speicherzelle (40) parallel geschaltet, deren innerer Stromkreis im Bedarfsfall überbrückt wird.

Fig. 1

## Sicherung

Die Erfindung bezieht sich auf eine Sicherung für eine elektrochemische Speicherzelle gemäß dem Oberbegriff des Patentanspruches 1.

Solche Sicherungen finden vor allem in Hochtemperatur-Speicherbatterien eine Anwendung, die aus wiedraufladbaren elektrochemischen Speicherzellen aufgebaut sind. Sie dienen hier zur Überbrückung von Speicherzellen, deren Funktion gestört ist, und die deshalb aus dem Stromkreis der Hochtemperatur-Speicherbatterie herausgetrennt werden müssen, damit die Kapazität der Batterie nicht wesentlich gemindert wird. Bei Hochtemperatur-Speicherbatterien, die für Fahrzeuge verwendet werden, besteht die Notwendigkeit, viele elektrochemische Speicherzellen in Reihe und nur wenige parallel zu schalten. Gründe hierfür sind dadurch gegeben, daß der Energienhalt einer solchen Batterie im allgemeinen kleiner als 40 kWh sein wird, der Energieinhalt einer einzelnen Speicherzelle jedoch größer als 80 Wh ist. Daraus folgt, daß eine solche Fahrzeugbatterie nicht mehr als 500 Speicherzellen beinhalten muß. Falls mit einer solchen Batterie bei einer Spannung der Einzelspeicherzelle von etwa 2 Volt insgesamt 200 Volt erzeugt werden sollen, müssen 100 Speicherzellen in Serie geschaltet werden. Das bedeutet, daß höchstens fünf Speicherzellen parallel geschaltet werden können. Da die Redundanz bei fünf parallel geschalteten Speicherzellen noch nicht sehr groß ist, ist es zweckmäßig möglichst viele Speicherzellen in Serie zu schalten.

Probleme treten bei der beschriebenen Schaltung dann auf, wenn eine Speicherzelle einer Sereinschaltung defekt wird. Bei Natrium/Schwefel-Speicherzellen hat es sich gezeigt, daß ein Defekt meist dadurch auftritt, daß der Festelektrolyt Risse bekommt, so daß die Reaktionsstoffe Natrium und Schwefel chemisch miteinander direkt reagieren können, und von der Speicherzelle keine Spannung mehr abgegeben wird. Eine solche defekte Speicherzelle weist einen großen Innenwiderstand auf, der meist um mehr als einen Faktor 2 größer ist als der ohmsche Widerstand einer intakten Speicherzelle. Die Folge hiervon ist, daß durch den Zweig mit der defekten Speicherzelle nur ein sehr geringer oder kein Lade-oder Entladestrom fließt. Ist der Widerstand der defekten Speicherzelle sehr groß, so fällt der Zweig, in dem sich die defekte Speicherzelle befindet, vollständig für die Stromversorgung aus. Dies bedeutet, daß die Kapazität der Gesamtbatterie unter diesen Bedingungen beachtlich kleiner ist als diejenige einer intakten Hochtemperatur-Speicherbatterie.

Aus der DE-OS 34 26 199 ist ein Überbrückungselement bekannt, mit dem der Stromkreis durch die Speicherzelle überbrückt werden kann. Dieses Überbrückungselement ist so ausgebildet, daß es erst dann anspricht, wenn der Widerstand einer ausgefallenen Speicherzelle einen Wert von mehr als 120 m Ohm aufweist. Weist die Speicherzelle dagegen einen Widerstand zwischen 50 und 120 m Ohm auf, so befindet sie sich weiterhin in der Serienschaltung mit den anderen Specherzellen, und der von außen auf die defekte Speicherzelle aufgeprägte Strom erwärmt die Speicherzelle sehr stark. Bei mehr als 100 m Ohm muß mit einer Wärmeleistung von etwa 100 W gerechnet werden, was zur Zerstörung der Speicherzelle und zur Fehlerfortpflanzung führen kann.

Der Erfindung liegt deshalb die Aufgabe zugrunde, eine Sicherung zu schaffen, mit deren Hilfe der Stromkreis durch die Speicherzelle schon beim Erreichen von 100 m Ohm dauerhaft unterbrochen wird.

Diese Aufgabe wird erfindungsgemäß durch die Merkmale des Patentanspruches 1 gelöst.

Weiter erfindungswesentliche Merkmale sind in den Unteransprüchen gekennzeichnet.

Die Erfindung wird nachfolgend anhand von Zeichnungen näher erläutert.

Es zeigen:

Fig.1 Eine Sicherungsvorrichtung, die mit einer Speicherzelle verbunden ist,

Fig.2 die Serienschaltung dreier Speicherzellen, die mit erfindungsgemäßen Sicherungsvorrichtungen ausgerüstet sind.

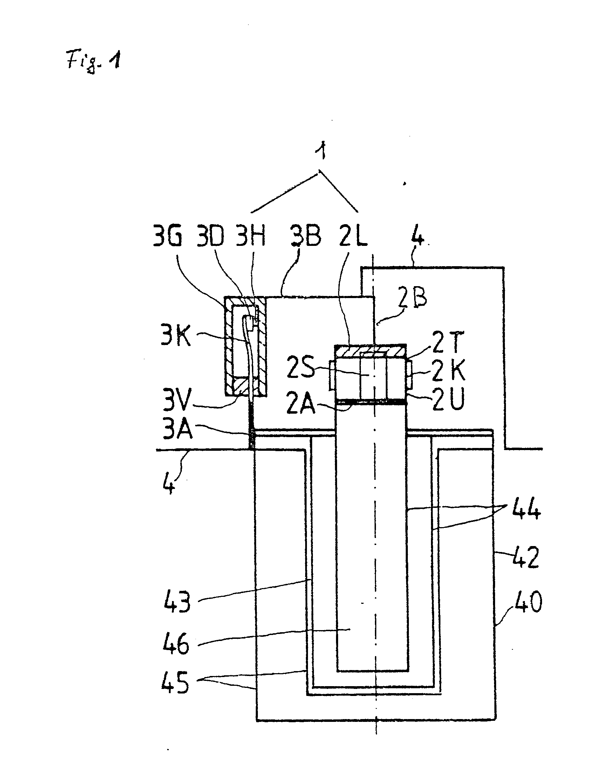

Die in Fig. 1 dargestellte Sicherung 1 wird im wesentlichen durch die Parallelschaltung eines temperatursensitiven Bauelementes 2 und eines spannungssensitiven Bauelementes 3 gebildet. Erfindungsgemäß können das temperatursensitive Bauelemten 2 und das spannungssensitive Bauelement 3 in einem gemeinsamen Gehäuse (hier nicht dargestellt) angeordnet werden. Die Sicherung 1 ist zu einer elektrochemischen Speicherzelle 40 parallel geschaltet. Diese ist in Fig. 1 nur schematisch dargestellt. Sie wird nach außenhin von einem metallischen Gehäuse 42 begrenzt, das zylinderförmig ausgebildet und einseitig verschlossen ist. Im Inneren der Speicherzelle 40 ist ein Festelektrolyt 43 angeordnet, der aus Betaaluminiumoxid gefertigt und als einseitig geschlossenes Rohr ausgebildet ist. Das Innere des Festelektrolyten 43 dient als Anodenraum 44. Die Abmessungen des Festelektrolyten 43 sind so gewählt, daß zwischen seinen Außenflächen und den Innenflächen des Gehäuses 42 ein zusammenhängender Raum 45 verbleibt, der als Kathodenraum dient. Als anodischer Stromabnehmer dient ein elektrisch leitender Stab 46. der weit in den Anodenraum 44 hineinragt.

Als Kathodischer Stromabehmer dient das metallische Gehäuse 2. Der erste Anschlußpol 2A des temperatursensitiven Bauelementes 2 steht in elektrisch leitendem Kontakt mit dem anodischen Stromabnehmer 46. Der erste Stromanschluß 3A des spannungssensitiven Bauelementes 3 ist elektrisch leitend mit dem Gehäuse 42 der Speicherzelle 40 verbunden. Die zweiten elektrischen Anschlußpole 2B und 3B der beiden Bauelemente 2 und 3 sind miteinander sowie mit einem elektrischen Leiter 4 verbunden, der an den kathodischen Stromabnehmer einer hier nicht dargestellten Speicherzelle angeschlossen ist. Das Gehäuse 42 der hier dargestellten Speicherzelle 40 steht ebenfalls mit einem elektrischen Leiter 4 einer weiteren nicht nicht dargestellten Speicherzelle in Verbindung.

Das temperatursensitive Bauelement 2 wird durch zwei becherförmige Bauteile 2T und 2U gebildet. Der Durchmesser der beiden Bauteile 2T und 2U ist gleich groß und an den Querschnitt des anodischen Stromabnehmers 46 angepaßt, mit dem das als Anschlußpol 2A dienende Bauteil 2U verbunden ist. Die beiden Bauteile 2T und 2U sind aus einem gut leitenden elektrischen Material gefertigt.

Ihre Öffnungen sind in definiertem Abstand voneinander gegenüberliegend angeordnet. Über einen nichtleitenden Abstandhalter 2K in Form eines Zylinders sind die beiden Bautile 2T und 2U miteinander verbunden. Der Abstandhalter 2K ist vorzugsweise aus einem keramischen Material gefertigt. Das Bauteil 2T ist wenigstens teilweise mit einem elektrisch leitenden Lot ausgefüllt, das bei 400 bis 500 °C flüssig wird. Der Boden des Bauteils 2U ist mit dem Lot 2L über einen Stab 2S elektrisch leitend verbunden. Das Lot 2L, welches in das Bauteil 2T eingefüllt ist, besteht vorzugsweise aus einem Aluminium-Ma-gnesium-Eutektikum. Die Länge des Stabes 2S ist so gewählt, daß sein zweites Ende einige Millimeter in die Legierung 2L hineinragt. Das spannungssensitive Bauelement 3 wird nach außenhin durch ein Gehäuse 3G begrenzt. Dieses ist becherförmig ausgebildet und aus einem metallischen Material hergestellt. Im Inneren des Gehäuses 3G ist ein Halbleiterbauelement 3H angeordnet, das als Siliziumdiode oder als Zenerdiode ausgebildet ist. Die Dioden sind so mit dem Stromabnehmer 42 der Speicherzelle 40 verbunden, daß sie bei intakter Speicherzelle 40 in Sperrrichtung betrieben werden. Durch die normale Spannung der Speicherzelle 40 von 2.1V wird nur ein sehr kleiner Sperrstrom hervorgerufen. Kommt es jedoch zu einer Spannungsumkehr an den Stromabnehmern 42 und 46 der Speicherzelle 40, weil diese hochohmig geworden ist, so beginnt nach dem Erreichen der Durchbruchsspannung der Diode 2H ein sehr hoher Strom durch die jeweilige Diode des spannungssensitiven Bauelementes zu fließen. Bei der hier dargestellten Ausführungsform ist das Halbleiterbauelement 3H direkt auf der Innenfläche des metallischen Gehäuses 3G angeordnet und elektrisch leitend mit diesem verbunden. Der zweite elektrische Anschluß des Halbleiterbauelementes 3H steht über ein scheibenförmiges Bauteil 2D mit einer Kontakfeder 3K in Verbindung. Das scheibenförmige Bauteil 3D ist aus einer Schmelzlegierung, vorzugsweise einer Aluminiumlegierung gefertigt. Auf der Oberfläche des scheibenförmigen Bauteils 3D ist das erte Ende der Kontaktfeder 3K so angeordnet, daß eine elektrisch leitende Verbindung zwischen dem Bauteil 3D und der Kontaktfeder 3K entsteht. Die Kontaktfeder 3K ist so angeordnet, daß ihr erstes Ende fest auf die Oberfläche des scheibenförmigen Bauteils 3D drückt. Zu diesem Zweck ist die Kontaktfeder 3K in vorgespanntem Zustand innerhalb des Gehäuses 3G angeordnet. Das zweite Ende der Kontaktfeder 3K ist durch einen Verschluß 3V des Gehäuses 3G hindurch nach außen geführt. Der Verschluß 3V ist aus einem isolierenden Material gefertigt, das gegenüber Temperaturen von 850° C und mehr beständig ist. Das zweite Ende der Kontaktfeder 3K steht nach außenhin über und bildet den ersten Anschlußpol 3A, der mit dem Gehäuse 42 der Speicherzelle 1 elektrisch leitend verbunden ist. Das Gehäuse 3G des spannungssensitiven Bauelementes 3 dient als zweiter Anschlußpol 3B und steht mit dem elektrischen Leiter 4 in Verbindung.

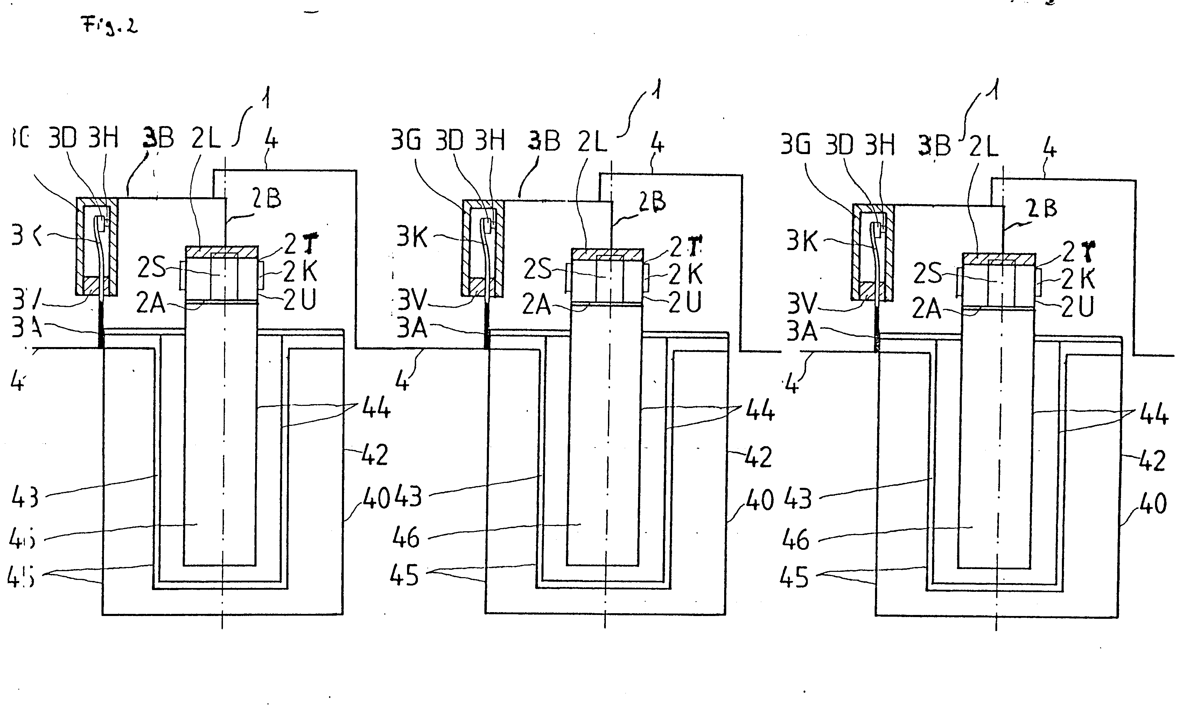

Fig. 2 zeigt drei Speicherzellen einer nicht vollständig dargestellten Serienschaltung von Speicherzellen 40. Die Speicherzellen 40 sind alle so aufgebaut wie die in Figur 1 dargestellte und in der dazugehörigen Beschreibung erläuterte Speicherzelle 40. Zu jeder Speicherzelle 40 ist eine erfindungsgemäße Sicherung 1 parallel geschaltet. Die Sicherungen 1 sind so aufgebaut wie in Figur 1 dargestellt und in der zugehörigen Beschreibung erläutert. Sind die in Figur 2 dargestellten Speicherzellen 40 vollständig in Ordnung, so fließen der Lade-und Entladestrom der Serienschaltung vollständig durch sie hindurch. Kommt es nun beispielsweise in einer Speicherzelle 40 zum Bruch des Festelektrolyten, so steigt die Temperatur in dieser Speicherzelle 40 an. Diese Temperaturerhöhung wirkt auf das mit der Speicherzelle 40 verbundene temperatursensitive Bauelement 2. Das in dem Bauelement 2 enthaltene Lot beginnt beim Erreichen einer Temperatur der Speicherzelle 40 zwischen 400 und 500 °C zu schmelzen und fließt von dem Bauteil 2T in das Bauteil 2U. Hierdurch wird die elektrisch leitende Verbindung zwischen dem Bauteil 2U und dem Bauteil 2T unterbrochen. da das zweite Ende des Stabes 2S keinen elektrisch leitenden Kontakt mehr mit dem Bauteil 2T aufweist und sich damit auch nicht mehr in Verbindung mit dem elektrischen Leiter 4 befindet. Die gesamte Spannung der Serienschaltung liegt nunmehr an den beiden Anschlußpolen 3A und 3B des spannungssensitiven Bauelementes 3 an. Diese Spannung ist so groß, daß die Druchbruchsspannung des als Zenerdiode ausgebildeten halbleiterbauelementes 3H erreicht wird. Die Zenerdiode 3H wird so gewählt, daß ihre Durchbruchsspannung zwischen 10 und 30 V liegt. Die Zenerdiode 34 wird nun irreversibel niederohmig, so daß der gesamte Strom über das Bauelement 3 fließt, ohne daß die Speicherzelle 40 gleichzeitig kurzgeschlossen ist. Mit Hilfe der erfindungsgemäßen Sicherung 1 werden bereits Speicherzellen 40, die einen inneren Widerstand von 100 m Ohm aufweisen vor einer Zerstörung geschützt, da sie durch den Einfluß der Temperaturerhöhung schon frühzeitig aus dem Zellverband herausgetrennt werden. Durch das Abtrennen der Speicherzelle 40 wird diese hochohmig und das spannungssensitive Bauelement 3 übernimmt den gesamten Strom. Eine Kurzschlußentladung der defekten Speicherzellen 40 wird grundsätzlich vermieden, auch dann, wenn die Speicherzelle 40 voll aufgeladen ist und sehr hohe Ströme fließen. Hierdurch wird sichergestellt, daß keine schädlichen Temperaturerhöhung hervorgerufen und somit die benachbarten Speicherzellen 40 nicht in Mitleidenschaft gezogen werden.

**Ansprüche**

1. Sicherung für eine wiederaufladbare elektrochemische Speicherzelle (40), dadurch gekennzeichnet, daß der anodische und der kathodische Stromabnehmer (42,46) einer Speicherzelle (40) durch die Parallelschaltung eines temperatursensitiven Bauelementes (2) und eines spannungssensitiven Bauelementes (3) überbrückt sind.

2. Sicherung nach Anspruch 1, dadurch gekennzeichnet, daß das spannungssssensitive Bauelement (3) mit seinem ersten elektrischen Anschluß (3A) mit dem kathodischen Stromabnehmer (42) der Speicherzelle (40) verbunden und mit dem zweiten Anschlußpol an einen elektrischen Leiter (4) einer weiteren Speicherzelle (40) angeschlossen ist.

3. Sicherung nach einem der Ansprüche 1 oder 2, dadurch gekennzeichnet, daß das spannungssensitive Bauelement (3) ein Halbleiterbauelement (3H) aufweist, das über ein scheibenförmiges Bauteil (3D) aus einer Schmelzlegierung elektrisch leitend mit einer vorgespannten Kontaktfeder (4K) in Verbindung steht, deren zweites freies Ende elektrisch leitend mit dem kathodischen Stromabnehmer (42) der Speicherzelle (40) verbunden ist.

4. Elektrochemische Speicherzelle nach Anspruch 3, dadurch gekennzeichnet. daß das Halbleiterbauelement (3H) als Siliziumdiode oder Zenerdiode ausgebildet ist.

5. Sicherung nach einem der Ansprüche 1 bis 3, dadurch gekennzeichnet, daß das temperatursensitive Bauelement (2) mit einem ersten Anschlußpol (2A) mit einem anodischen Stromabnehmer (46) der Speicherzelle (40) und dem zweiten Anschlußpol (3B) des spannungssensitiven Bauelementes (3) elektrisch leitend verbunden ist.

6. Sicherung nach einem der Ansprüche 1 bis 3, dadurch gekennzeichnet, daß das temperatursensitive Bauelement (2) aus zwei becherförmigen Bauteilen (2T und 2U) gebildet ist, die gleiche Abmessungen aufweisen und deren Öffnungen in definiertem Abstand voneinander gegenüberliegend angeordnet sind. und daß die beiden becherförmigen Bauteile (2O und 2U) über einen isolierenden Keramikzylinder (2K) miteinander verbunden sind.

7. Sicherung nach Anspruch 6, dadurch gekennzeichnet, daß die beiden becherförmigen Bauteile (2T und 2U) aus einem elektrisch leitenden Material gefertigt sind, daß das erste becherförmige Bauteil (2T) wenigstens teilweise mit einem Lot (2L) ausgefüllt und das zweite becherförmige Bauteil (2U) elektrisch leitend mit dem ersten Ende eines elektrisch leitenden Stabes (2S) verbunden ist, dessen zweites Ende in das Lot (2L) hineinragt, und daß die beiden becherförmigen Bauteil (2O und 2U) als erste bzw. zweite Anschlußpole (2A und 2B) vorgesehen sind.

8. Sicherung nach Anspruch 6 oder 7, dadurch gekennzeichnet, daß das Lot (2L) ein zwischen 400 und 500 °C flüssiges Aluminium-Magnesium-Eutektikum ist.

9. Sicherung nach einem der Ansprüche 1 bis 8, dadurch gekennzeichnet, daß das temperatursensitive Bauelement (2) und das spannungssensitive Bauelement (3) in einem gemeinsamen Gehäuse angeordnet sind.

Fig. 1

Fig.2

0 270 044